# EUROPEAN PATENT APPLICATION

(11) **EP 1 462 736 A1**
(43) Date of publication of application: **29.09.2004**
(21) Application number: 04075901.1
(22) Date of filing: 25.03.2004
(51) Int. Cl.: F24J 3/08, F28D 20/00

(54) **Method of storing and abstracting heat and cold in or from an aquifer**

(30) Priority: 25.03.2003 NL 1023012
(71) Applicant: Econcern BV, 3526 KL Utrecht (NL)
(72) Inventor: Schaap, Antonius Bernardus, 1222 LN Hilversum (NL)
(74) Representative: Kupecz, Arpad

(57) **Abstract**

The present invention relates to a method of storing and abstracting heat and coldness in or from an aquifer. In accordance with the invention, there is a third body of water (6) at a temperature between Tₗ and Tₕ in addition to a first body of water (4) at a first, high temperature Tₕ and a second body of water (7) at a second, low temperature Tₗ. When abstracting coldness from the second body of water (7) the temperature of the water is raised to a temperature Tₘ₂ that lies between Tₕ and Tₗ, and when abstracting heat from water having the first temperature, the temperature is lowered to Tₘ₁. The water having temperature Tₘ₁ or Tₘ₂ is stored in the third body of water (6). The invention makes it possible to considerably reduce the capital outlay and thereby to improve the cost-effectiveness of this form of energy saving.

## Description

The present invention relates to a method of storing and abstracting heat and coldness in or from an aquifer, where in times of available heat the heat is stored in a first body of water at a first, high temperature Tₕ, in times of available coldness the coldness is stored in a second body of water at a second, low temperature Ti, wherein for the abstraction of heat, heat is abstracted from the first body of water and for the abstraction of coldness, coldness is abstracted from the second body of water, and water having a temperature between Tₕ and T₁, is stored.

Such a method is generally known and is used for the storage of heat and coldness up to a moment at which there is a demand for it. This may involve day/night storage, but also storage for a longer period of time, such as seasonal storage. In this way a surplus of heat in the summer may be stored and used in the winter. Wintry coldness can be used in the summer for cooling. The known method may be applied, for example, for heating and cooling a residence, groups of residences, utility buildings such as offices, greenhouses and also in industrial processes.

Although a vast saving in energy can be realised with such a method, the capital outlay is very high, with the consequence that the payback-time is unfavourably long.

The object of the present invention is to provide a method of the kind mentioned in the preamble, with which the costs can be reduced.

To this end the method according to the invention is characterised in that the abstraction of heat causes the temperature of the water to drop to a temperature Tₘ₁ that lies between Tₕ and T₁, and the abstraction of coldness causes the temperature of the water to rise to a temperature Tₘ₂ that lies between Tₕ and T₁, and in that water having a temperature of Tₘ₁ or Tₘ₂ is stored in a third body of water.

By using a third body of water receiving both cooled water having a temperature Tₘ₁ and heated water having a temperature Tₘ₂, the costs are reduced. The known methods work by using two sources for storing heat and two sources for storing coldness. Although combining of water having a temperature Tₘ₁ and water having a temperature Tₘ₂ has a slightly unfavourable effect, this effect does not outweigh the reduction of capital outlay or more specifically, the saving of one source. A source comprises a known technical apparatus with which water can be pumped up from a water bearing stratum and with which water can be infiltrated into a water bearing stratum. A source is usually comprised of a pump for pumping up or infiltrating the water, a valve controlling the direction of the flow and a filter placed over that stretch of a water bearing stratum in the well over which water is withdrawn or infiltrated, here referred to as body of water. More than one source may be provided in one well and in one water bearing stratum, because as warmer water is lighter than colder water, the respective bodies of water remain separate from each other.

In the field of process technology cooling and heating a reactor or press is known from US 4,373,574 (date of grant 15 February 1983). To this end three vessels are used, in which heat exchanger liquid of a respective temperature is stored. According to the described invention, the necessity of also having to heat the heat exchanger liquid in the press (or the reactor vessel) when heating, and similarly cooling it when cooling, is avoided. This would result in loss of energy. Therefore the heat exchanger liquid is fed into a vessel prior to cooling or heating. After a cooling step, the stored warm heat exchanger liquid is used for preheating the press. Stored cold heat exchanger liquid is used for cooling the press, which is then, (after storing the thus warmed heat exchanger liquid) cooled further, using a cooling tower. To improve the efficiency, use is made of three vessels. In order to further cool and heat the press, the pipes of the press are emptied and a different medium is conducted through the press.

Water is preferably stored in the third body of water wherein Tₘ₁ = Tₘ₂ ± 5°C, more preferably Tₘ₁ = Tₘ₂ ± 3°C.

This limits the energetic disadvantage that results when combining water having a temperature Tₘ₁ and water having a temperature Tₘ₂.

In accordance with a preferred embodiment, to obtain a suitable temperature Tₘ₁, a heat pump is used to abstract more heat from water of the first body of water prior to feeding it to the third body of water.

Similarly, in order to obtain a suitable temperature Tₘ₂, a heat pump is used in accordance with a favourable embodiment for abstracting more coldness from water of the second body of water prior to feeding this water to the third body of water.

In order to make optimal use of stored heat, a heat pump may be used in accordance with a favourable embodiment for abstracting more heat from water of the third body of water prior to feeding this water to a second body of water.

For example water, whose temperature has been raised with the aid of the heat pump, can be used for low-temperature heating. If desired, the temperature of the water may be further raised by employing a second heat pump.

In accordance with an important preferred embodiment, to make use of seasonable warmth, water of at least one body of water is selected from the second and third bodies of water heated with the aid of solar heat and conducted to a body of water selected from the first and the third body of water.

Prior to storing the heat present in the first or third body of water, the temperature of the water can optionally be raised with the aid of total energy system or waste heat.

Such a method is interesting, for example, for the removal of heat from greenhouses. In this application the amount of heat available is very large, but the temperature is relatively low. Even a modest supply of energy derived from a total energy system or waste heat raises the temperature of the heat to be stored. This limits the amount of water that has to be moved in the bodies of water, and accordingly also the costs.

For the regeneration of the reservoirs, the water of the third body of water is preferably cooled in the winter by heat exchange with the environment, and fed to the second body of water.

In accordance with a preferred embodiment, the aquifer comprises one well, with which at least two of the first, second and third body of water of the aquifer are in communication, and water is fed to and discharged from the respective body of water via this single well.

The costs for boring a well are very high and the invention makes it possible to energy-efficiently serve two and preferably three bodies of water via one well. This means a vast saving in costs.

The invention will now be elucidated by way of an exemplary embodiment and with reference to the drawing in which the single figure schematically depicts a system suitable to be used for the method according to the invention.

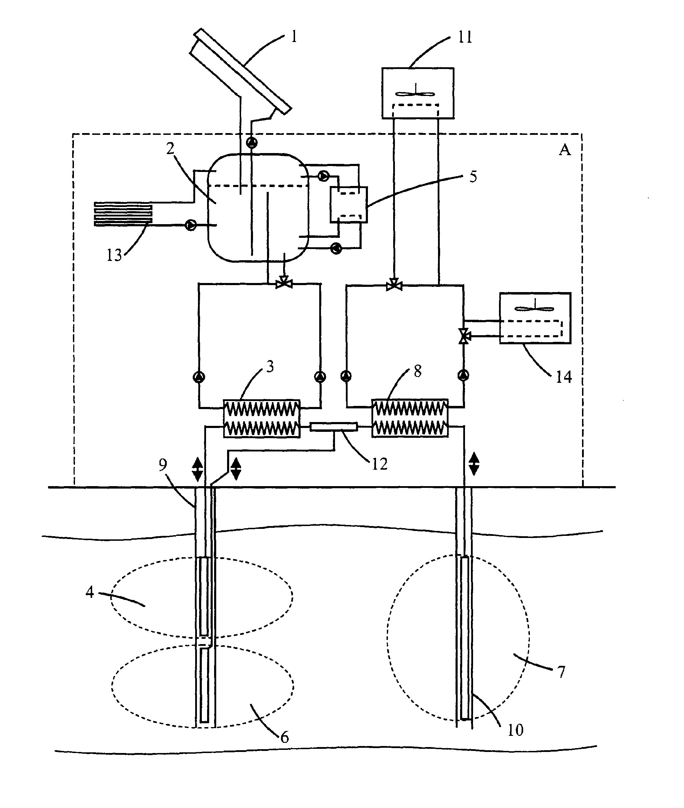

Figure 1 shows a system suitable to be used for the method according to the invention, such as maintaining a building A (indicated with a broken line) at a desired temperature. Solar heat is collected by means of a solar collector 1 and temporarily stored in a warm water container 2. As shown, this is preferably a tank and the water is preferably stored in layers (hottest water at the top). The warm water container 2 makes it possible to meet the building's daily requirement for heating and hot tap water. Any possible heat surplus is conducted via a heat exchanger 3 to a storage reservoir 4 for long-term storage at a temperature of, for example, 40°C. The warm water container 2 may be in communication with a water pump 5, which further raises the temperature of warm water in the warm water container 2 (and lowers the temperature of less warm water in the warm water container 2). In this way the warm water reaches a more useful temperature for employment or, if the water is stored in a storage reservoir 4, the flow rate - and accordingly the cost for pumping and the like - is reduced. After having given off heat via the heat exchanger 3, the cold water is returned to the warm water container 2.

If there is a demand for heat in the building, water may be taken from the storage reservoir 4 and supplied via a heat exchanger to the building. The water may be conducted to, and stored in, a storage reservoir 6. The water has a temperature of, for example, 15°C. If desired, a heat pump may be used as heat exchanger 3, or in addition to heat exchanger 3 (the latter situation is not shown).

When there is a demand for coldness, such as for cooling during the summer, water may be supplied from a storage reservoir 7, which water has a temperature of, for example, 8°C. Via a heat exchanger 8 the coldness is given off to the building. The heated water is stored in a storage reservoir 6.

The storage reservoirs 4, 6, 7 may be formed by layers of water in an aquifer. In the schematically illustrated case there are two wells 9, 10, but it is possible to use one single well, which is internally provided with pipes to the different layers of water. The practice of drawing on more than one layer of water separately via one single well is known in the art and requires no further explanation. For the same reason there is no need to elaborate on the pipes connecting the various parts of the installation, the pumps (circled triangle) or the control valves (three abutting triangles).

For regenerating the storage reservoir 7, water is taken from the storage reservoir 6 and cooled in a suitable manner. This may be achieved by means of heat exchanger 8 in the form of, for example a heat pump or, in addition to heat exchanger 8, as separate heat pump (this case not shown), which abstracts heat from the water having a temperature of 15°C. In the embodiment shown, an air-cooler 11 is provided, which is used for dissipating heat to the atmosphere.

Variations between mass flow rates (water) to or from the storage reservoirs 4 and 7 may be buffered by storage reservoir 6 via distributor 12.

When there is a demand for heat, such as during the winter, heat is given off from the warm water container 2 to the building by means of a heating system 13, in particular a heating system 13 that is suitable for heating with heat of a relatively low temperature. Examples of such heating systems 13 are, for instance, floor heating, wall heating or air heating.

When there is a demand for coldness, such as during the summer, coldness is given off to the building with the aid of a cooling system 14. This may be air cooling.

It is observed, that the use of heat exchangers 3, 8 ensure that no water (ground water) will find it's way into the more sensitive components of the installation (such as 1, 5, 13 and 14), where this water could possibly form deposits or cause corrosion, which in turn may cause damage or curtail the life of the installation, thereby increasing the costs and/or reducing the thermal efficiency. Furthermore, the ground water is protected against pollution from the building.

### Exemplary embodiment

For the exemplary embodiment a Dutch reference office was chosen; the "NPR 2917 Example 4: office building" from the arithmetic program of the Energy Performance for the Utility (EPU). The building of Example 4 is an office with a relatively low energy consumption, with an EPC (Energy Performance Coefficient) of 1.12. For this exemplary embodiment the surface area of the floor has been increased to 10,000 m², because if the surface area of the floor is larger, the relative losses of the heat source are lower.

The characteristics are presented in the Table 1 below.

**Table 1**

| | | |
|---|---|---|
| Surface area floor | 10000 | m² |
| Surface area external north and south wall | 2500 | m² |
| Surface area external east and west wall | 630 | m² |
| Glass surface area external south wall | 900 | m² |
| Surface area roof | 2570 | m² |
| Number of floors | 4 | m² |

For an EPC (Energy Performance Coefficient) of 1.12 this building has the following thermal characteristics (see Table 2).

**Table 2**

| | | |
|---|---|---|
| Insulating value of external walls, roof and floor | 3 | m²K/W |
| Heat loss factor of the windows | 1,8 | W/m²K |
| Infiltration (qᵥ=10 Pa) | 0,180 | Dm³/s m² |
| Ventilation heat recovery (return) | 0,7 | |
| Reference heating: HR 100 (High-efficiency) boiler: efficiency heater | 85% | |
| Supply temperature heating, less than | 55 | °C |
| Reference cooling: compression cooling machine (efficiency): | 350% | |

The energy demand of such a building is given below (Table 3):

**Table 3**

| | | |
|---|---|---|
| Heat demand (including distribution losses) | 1,76 | TJ/year |
| Coldness demand (including distribution losses) | 0,77 | TJ/year |
| Hot tap water demand | 0,70 | TJ/year |

For the exemplary embodiment such a building is provided with an installation according to the present invention, for example, of the kind discussed above (figure). For the heating to realise the peak capacity, an auxiliary boiler (fuelled by natural gas) may be added.

For collecting solar heat in the summer, both flat plate collectors and vacuum pipe collectors may be used. Vacuum pipe collectors are slightly more expensive but in this application have a higher output. If tubular vacuum collectors are used in the exemplary embodiment the dimensions are as follows (Table 4):

**Table 4**

| | | |
|---|---|---|
| Surface area collector | 700 | m² |
| Capacity heat pump (electrical) | 70 | kW |
| Maximum capacity heating | 400 | kW |
| Maximum capacity cooling | 550 | kW |
| Maximum volume heat source (water) | 7000 | m³ |
| Maximum volume cold source (water) | 22000 | m³ |
| Maximum tepid source (water) | 22000 | m³ |
| Maximum flow rate heat source | 12 | m³/uur |
| Maximum flow rate coldness source (water) | 60 | m³/uur |
| Maximum flow rate tepid source | 60 | m³/uur |
| Volume day storage reservoir | 3 | m³ |

The volume of the day storage is strongly dependent on the demand for hot tap water. The loading of heat or the loading of coldness directly from the surrounding air (via the air-cooler) is dependent on the energy balance of the system. In this exemplary embodiment extra heat needs to be loaded from the surrounding air (approximately 0,3 TJ/year). The contribution from the collectors is 1.8 TJ/year. The contribution from the heat pump is 0.4 TJ/year (electricity). Owing to the relatively high source temperature, the heat pump realises an SPF of 5.3. The SPF (Seasonal Performance Factor) is the average of the COP taken over one whole year. The COP (Coefficient Of Performance) is the delivered heat divided by the electricity required. If we also include the heat delivered directly by the collectors, the system realises an SPF of 6.6, and if we also include the delivered coldness, the system realises an SPF of 8.6. This means that the energy delivered (in the form of heat and coldness) is 8.6 times the electricity consumed. In respect of a reference system using a high efficiency boiler for central heating and hot tap water and a compression-cooling machine for the coldness demand, the present system saves 75% of primary energy. With respect to an aquifer system consisting of two sources (cold and tepid) for cooling and heating, including a heat pump but without collectors, the present system saves 40% of primary energy.

## Claims

1. A method of storing and abstracting heat and coldness in or from an aquifer, where in times of available heat the heat is stored in a first body of water at a first, high temperature Tₕ, in times of available coldness the coldness is stored in a second body of water at a second, low temperature Ti, wherein for the abstraction of heat, heat is abstracted from the first body of water and for the abstraction of coldness, coldness is abstracted from the second body of water, and water having a temperature between Tₕ and T₁, is stored, **characterised in that** the abstraction of heat causes the temperature of the water to drop to a temperature Tₘ₁ that lies between Tₕ and T₁, and the abstraction of coldness causes the temperature of the water to rise to a temperature Tₘ₂ that lies between Tₕ and Ti, and **in that** water having a temperature of Tₘ₁ or Tₘ₂ is stored in a third body of water (6).

2. A method according to claim 1, **characterised in that** water is stored in the third body of water (6) wherein Tₘ₁ = Tₘ₂ ± 5°C, more preferably Tₘ₁ = Tₘ₂ ± 3°C.

3. A method according to claim 2, **characterised in that** water is stored in the third body of water (6) wherein Tₘ₁ = Tₘ₂ ± 3°C.

4. A method according to one of the preceding claims, **characterised in that** a heat pump (3) is used to abstract more heat from water from the first body of water (4) prior to feeding it to the third body of water (6).

5. A method according to one of the preceding claims, **characterised in that** a heat pump (8) is used for abstracting more coldness from water from the second body of water (7) prior to feeding this water to the third body of water (6).

6. A method according to one of the preceding claims, **characterised in that** a heat pump (8) is used for abstracting more heat from water from the third body of water (6) prior to feeding this water to a second body of water (7).

7. A method according to one of the preceding claims, **characterised in that** water of at least one body of water is selected from the second and third bodies of water (7, 6) heated with the aid of solar heat and conducted to a body of water selected from the first and the third body of water (4, 6).

8. A method according to one of the claims 7, **characterised in that** prior to storing the heat present in the first (4) body of water, the temperature of the water is raised with the aid of a total energy system or waste heat.

9. A method according to one of the preceding claims, **characterised in that** water of the third body of water (6) is preferably cooled in the winter by heat exchange with the environment, and fed to the second body of water (7).

10. A method according to one of the preceding claims, **characterised in that** the aquifer comprises one well (9), with which the first, second and third body of water (4, 6, 7) of the aquifer are in communication, and water is fed to and discharged from the respective bodies of water (4, 6, 7) via this single well (9).
